(19) Europäisches Patentamt / European Patent Office / Office européen des brevets

(11) **EP 4 474 425 A1**

(12) **EUROPEAN PATENT APPLICATION**
published in accordance with Art. 153(4) EPC

(43) Date of publication:
**11.12.2024   Bulletin 2024/50**

(21) Application number: 23749819.1

(22) Date of filing: **02.02.2023**

(51) International Patent Classification (IPC):
*C08L 67/00* (2006.01)        *B23K 26/00* (2014.01)
*B23K 26/324* (2014.01)        *B23K 26/57* (2014.01)
*B29C 65/16* (2006.01)        *C08K 3/013* (2018.01)
*C08K 3/08* (2006.01)        *C08K 3/40* (2006.01)
*C08K 7/14* (2006.01)        *C08L 67/02* (2006.01)
*C08L 69/00* (2006.01)

(52) Cooperative Patent Classification (CPC):
**B23K 26/00; B23K 26/324; B23K 26/57;
B29C 65/16; C08K 3/013; C08K 3/08; C08K 3/40;
C08K 7/14; C08L 67/00; C08L 67/02; C08L 69/00;
Y02W 30/62**

(86) International application number:
**PCT/JP2023/003391**

(87) International publication number:
**WO 2023/149503 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **04.02.2022   JP 2022016433
04.02.2022   JP 2022016435
24.03.2022   JP 2022049134
24.03.2022   JP 2022049135**

(71) Applicant: **Mitsubishi Chemical Corporation
Tokyo 100-8251 (JP)**

(72) Inventor: **ISEKI Shuta
Hiratsuka-shi, Kanagawa 254-0016 (JP)**

(74) Representative: **Hoffmann Eitle
Patent- und Rechtsanwälte PartmbB
Arabellastraße 30
81925 München (DE)**

(54) **RESIN COMPOSITION, MOLDED ARTICLE, PELLET, AND LASER WELDED BODY**

(57)    To provide a resin composition with excellent laser marking properties. To provide a resin composition that is for use as a laser-transmitting resin member in laser welding and capable of being laser-marked. To provide a molded body, pellets, and a laser-welded body including the resin compositions. A resin composition comprising a polyester resin and a polycarbonate resin, wherein a mass ratio between the polyester resin and the polycarbonate resin is 10/90 to 90/10, wherein a total of the polyester resin and the polycarbonate resin is 100 parts by mass, and a content of aluminum element contained in the polycarbonate resin is 0.50 to 1000.00 ppm by mass per 100 parts by mass of the polycarbonate resin.

[Figure 1]

Example 1-1 · Comparative Example 1-1 · Comparative Example 1-2 · Comparative Example 1-3

**Description**

[Technical Field]

The present invention relates to a resin composition, a molded body, pellets, and a laser-welded body.

In particular, the present invention relates to a resin composition used for the production of a molded body capable of being laser-marked.

Further, the present invention relates to a resin composition that is for use as a laser-transmitting resin member in laser welding and capable of being laser-marked.

[Background Art]

Thermoplastic polyester resins and polycarbonate resins, including polybutylene terephthalate resins, are excellent in mechanical strength and the like and also have excellent heat resistance, moldability, and recyclability, and they are therefore widely used for various equipment components.

Meanwhile, in recent years, the number of cases where welding processing is performed for productivity efficiency has increased for resin members formed from thermoplastic resins, and especially laser welding, which has little influence on electronic components, has been frequently used (for example, Patent Literature 1).

Laser welding is a technique in which a laser-transmitting resin member including a laser light-transmissive material (hereinafter sometimes referred to as a "transmitting resin member"), and a laser-absorbing resin member including a laser light-absorptive material(hereinafter sometimes referred to as an "absorbing resin member") are superposed on each other and irradiated with laser light from the transmitting resin member side to allow the interface thereof with the absorbing resin member to generate heat for welding. Resin compositions applied to molded bodies for such a use are required to have capability of being welded by irradiation with laser light (laser weldability).

On the other hand, in molded bodies, product information or others are often printed or drawn on the surfaces of molded bodies, for design and the display of information for finished articles, and also distinguishability of the component at the time of assembly, for example. When they are required to maintain their visibility over a long period, laser marking may be used in view of reliability.

Further, in recent years, a study has also been made of a resin composition that can be used as a laser-transmitting resin member in laser welding, the resin composition being capable of being laser-marked (Patent Literature 2).

[Citation List]

[Patent Literature]

[Patent Literature 1] Japanese Patent No. 6183822
[Patent Literature 2] Japanese Patent Laid-Open No. 2020-50822

[Summary of Invention]

[Technical Problem]

As described above, the demand for resins capable of being laser-marked is increasing, and as the applications of such resins expand, there is a need for a new resin composition with excellent laser marking properties.

In addition, as described above, the resin composition with excellent laser marking properties should also be capable of laser welding. Here, in terms of the designability of the laser-welded body, the transmitting resin member and the absorbing resin member are preferably colored with a similar color, and, for example, the absorbing resin member and the transmitting resin member may be colored black.

When the transmitting resin member is colored with a pigment having high laser light absorptance, like the absorbing resin member, laser light is not transmitted, and laser welding is impossible. Therefore, for the transmitting resin member, coloring matter is used that inhibit the transmission of laser light as little as possible.

On the other hand, when a transmitting resin member is subjected to laser marking, it cannot be marked if laser light is transmitted. Accordingly, a resin composition is also needed that is capable of being laser-marked while transmitting laser light to some extent.

Further, in recent years, the use of recycled resins has become increasingly sought after in view of environmental burden.

Under the above-described circumstances, the present invention aims to solve such problems.

Specifically, the first object of the present invention is to provide a resin composition with excellent laser marking properties.

In addition, the second object of the present invention is to provide a resin composition that is for use as a laser-transmitting resin member in laser welding and capable of being laser-marked.

Further, the third object of the present invention is to provide a resin composition that is environmental-friendly and is capable of being laser-welded and/or laser-marked.

Further, it is another object of the present invention to provide a molded body, pellets, and a laser-welded body including the above-described resin compositions.

[Solution to Problem]

The present inventors conducted research to address the above-mentioned problems, and as a result, discovered that the above problems could be solved by using a polyester resin and a polycarbonate resin as a thermoplastic resin, further using one containing a small amount of aluminum element as the polycarbonate resin.

Specifically, the problems described above are solved by the following means.

<1> A resin composition comprising a polyester resin and a polycarbonate resin, wherein a mass ratio between the polyester resin and the polycarbonate resin is 10/90 to 90/10, wherein a total of the polyester resin and the polycarbonate resin is 100 parts by mass, and a content of aluminum element contained in the polycarbonate resin is 0.50 to 1000.00 ppm by mass per 100 parts by mass of the polycarbonate resin.

<2> A resin composition comprising a polyester resin and a polycarbonate resin, wherein a mass ratio between the polyester resin and the polycarbonate resin is 10/90 to 90/10, wherein a total of the polyester resin and the polycarbonate resin is 100 parts by mass, the polycarbonate resin comprises a recycled product, and a molecular weight distribution (Mw/Mn) of the polycarbonate resin is 2.8 or more.

<3> The resin composition according to <1> or <2>, wherein the polyester resin comprises a polybutylene terephthalate resin.

<4> The resin composition according to any one of <1> to <3>, wherein the polycarbonate resin comprises a recycled product.

<5> The resin composition according to any one of <1> to <4>, wherein the polycarbonate resin comprises a recycled product, and a molecular weight distribution (Mw/Mn) of the polycarbonate resin is 2.8 or more.

<6> The resin composition according to <5>, wherein a viscosity average molecular weight Mv of the polycarbonate resin is 20,000 or more.

<7> The resin composition according to any one of <1> to <6>, wherein the recycled product accounts for 50 parts by mass or more in 100 parts by mass of the polycarbonate resin.

<8> The resin composition according to any one of <1> to <7>, wherein the mass ratio between the polyester resin and the polycarbonate resin is 50/50 to 90/10, wherein a total of the polyester resin and the polycarbonate resin is 100 parts by mass.

<9> The resin composition according to any one of <1> to <8>, further comprising an inorganic filler.

<10> The resin composition according to <9>, wherein the inorganic filler comprises glass fibers and/or glass flakes.

<11> The resin composition according to any one of <1> to <10>, further comprising a phosphorus-based stabilizer.

<12> The resin composition according to any one of <1> to <11>, wherein when molded to a thickness of 1.5 mm, the resin composition has a light transmittance of 20.0% or more at a wavelength of 1064 nm.

<13> The resin composition according to any one of <1> to <12>, wherein the resin composition is for laser marking.

<14> The resin composition according to any one of <1> to <13>, wherein the resin composition is used for a laser light-transmitting resin member in laser welding.

<15> The resin composition according to any one of <1> to <14>,

wherein the polyester resin comprises a polybutylene terephthalate resin,
the polycarbonate resin comprises a recycled product,
the recycled product accounts for 50 parts by mass or more in 100 parts by mass of the polycarbonate resin,
the mass ratio between the polyester resin and the polycarbonate resin is 50/50 to 90/10, wherein a total of the polyester resin and the polycarbonate resin is 100 parts by mass,
the resin composition further comprises an inorganic filler,
the inorganic filler comprises glass fibers and/or glass flakes,
the resin composition further comprises a phosphorus-based stabilizer,
when molded to a thickness of 1.5 mm, the resin composition has a light transmittance of 20.0% or more at a wavelength of 1064 nm,
the resin composition is for laser marking, and
the resin composition is used for the laser light-transmitting resin member in laser welding.

<16> The resin composition according to any one of <1> to <15>,

wherein the recycled product accounts for 50 parts by mass or more in 100 parts by mass of the polycarbonate resin, and a viscosity average molecular weight Mv of the polycarbonate resin is 20,000 or more,
the polyester resin comprises a polybutylene terephthalate resin,
the resin composition further comprises an inorganic filler,
the resin composition further comprises a phosphorus-based stabilizer,
the resin composition is for laser marking, and
the resin composition is used for a laser light-transmitting resin member in laser welding.

<17> A molded body formed from the resin composition according to any one of <1> to <16>.
<18> Pellets of the resin composition according to any one of <1> to <16>.
<19> A molded body formed from the pellets according to <18>.
<20> The molded body according to <17> or <19>, wherein the molded body is for laser marking.
<21> A laser-welded body comprising the molded body according to <17> or <19>.

<1-1> A resin composition including a polyester resin and a polycarbonate resin, wherein a mass ratio between the polyester resin and the polycarbonate resin is 10/90 to 90/10, wherein a total of the polyester resin and the polycarbonate resin is 100 parts by mass, and a content of aluminum element contained in the polycarbonate resin is 0.50 to 1000.00 ppm by mass per 100 parts by mass of the polycarbonate resin.
<1-2> The resin composition according to <1-1>, wherein the polyester resin includes a polybutylene terephthalate resin.
<1-3> The resin composition according to <1-1> or <1-2>, wherein the polycarbonate resin includes a recycled product.
<1-4> The resin composition according to <1-3>, wherein the recycled product accounts for 50 parts by mass or more in 100 parts by mass of the polycarbonate resin.
<1-5> The resin composition according to any one of <1-1> to <1-4>, wherein the mass ratio between the polyester resin and the polycarbonate resin is 50/50 to 90/10, wherein a total of the polyester resin and the polycarbonate resin is 100 parts by mass.
<1-6> The resin composition according to any one of <1-1> to <1-5>, further including an inorganic filler.
<1-7> The resin composition according to <1-6>, wherein the inorganic filler includes glass fibers and/or glass flakes.
<1-8> The resin composition according to any one of <1-1> to <1-7>, further including a phosphorus-based stabilizer.
<1-9> The resin composition according to any one of <1-1> to <1-8>, wherein when molded to a thickness of 1.5 mm, the resin composition has a light transmittance of 20.0% or more at a wavelength of 1064 nm.
<1-10> The resin composition according to any one of <1-1> to <1-9>, wherein the resin composition is for laser marking.
<1-11> The resin composition according to any one of <1-1> to <1-10>, wherein the resin composition is used for a laser light-transmitting resin member in laser welding.
<1-12> A molded body formed from the resin composition according to any one of <1-1> to <1-11>.
<1-13> The molded body according to <1-12>, wherein the molded body is for laser marking.
<1-14> A laser-welded body including the molded body according to <1-12> or <1-13>.

<2-1> A resin composition including a polyester resin and a polycarbonate resin,
wherein a mass ratio between the polyester resin and the polycarbonate resin is 10/90 to 90/10, wherein a total of the polyester resin and the polycarbonate resin is 100 parts by mass, the polycarbonate resin includes a recycled product, and a molecular weight distribution (Mw/Mn) of the polycarbonate resin is 2.8 or more.
<2-2> The resin composition according to <2-1>, wherein the recycled product accounts for 50 parts by mass or more in 100 parts by mass of the polycarbonate resin.
<2-3> The resin composition according to <2-1> or <2-2>, wherein a viscosity average molecular weight Mv of the polycarbonate resin is 20,000 or more.

<2-4> The resin composition according to any one of <2-1> to <2-3>, wherein the polyester resin includes a polybutylene terephthalate resin.

<2-5> The resin composition according to any one of <2-1> to <2-4>, further including an inorganic filler.

<2-6> The resin composition according to any one of <2-1> to <2-5>, further including a phosphorus-based stabilizer.

<2-7> The resin composition according to any one of <2-1> to <2-6>, wherein the resin composition is for laser marking.

<2-8> The resin composition according to any one of <2-1> to <2-7>, wherein the resin composition is used for a transmitting resin member for laser light in laser welding.

<2-9> A molded body formed from the resin composition according to any one of <2-1> to <2-8>.

<2-10> The molded body according to <2-9>, wherein the molded body is for laser marking.

<2-11> A laser-welded body including the molded body according to <2-9> or <2-10>.

[Advantageous Effects of Invention]

The present invention can provide a resin composition with excellent laser marking properties.

In addition, the present invention can provide a resin composition that is for use as a laser-transmitting resin member in laser welding and capable of being laser-marked.

Further, the present invention can provide a resin composition that is environmental-friendly and is capable of being laser-welded and/or laser-marked.

Moreover, the present invention can provide a molded body, pellets, and a laser-welded body including the above-described resin compositions.

[Brief Description of Drawings]

[Figure 1] Figure 1 shows photographs taken after laser printing in Example 1-1 and Comparative Examples 1-1 to 1-3.

[Figure 2] Figure 2 shows schematic views showing a test piece (transmitting resin member I) for measuring laser welding strength in Examples.

[Figure 3] Figure 3 shows schematic views showing a test piece (absorbing resin member II) for measuring laser welding strength in Examples.

[Figure 4] Figure 4 shows schematic views showing a test piece (a combination of the transmitting resin member I and the absorbing resin member II) for measuring laser welding strength in Examples.

[Figure 5] Figure 5 is a schematic view showing a method for measuring laser welding strength in Examples.

[Figure 6] Figure 6 shows photographs taken after laser printing in Example 2-1 and Comparative Examples 2-1 and 2-2.

[Description of Embodiment]

A mode for carrying out the present invention (hereinafter simply referred to as "this embodiment") will be described in detail below. This embodiment below is an illustration for describing the present invention, and the present invention is not limited to only this embodiment.

As used herein, "to" is used in the sense of including the numerical values described before and after it as the lower limit value and the upper limit value, respectively.

As used herein, various physical property values and characteristic values are at 23°C unless otherwise noted.

When the measurement methods, etc. described by the standards presented herein differ from year to year, they shall be based on the standards as of January 1, 2022, unless otherwise stated.

The resin composition of a first example of this embodiment is characterized in that it includes a polyester resin and a polycarbonate resin, the mass ratio between the polyester resin and the polycarbonate resin is 10/90 to 90/10 wherein the total of the polyester resin and the polycarbonate resin is 100 parts by mass, and the content of aluminum element contained in the polycarbonate resin is 0.50 to 1000.00 ppm by mass per 100 parts by mass of the polycarbonate resin.

Such a configuration enables a resin composition with excellent laser marking properties. Further, such a configuration enables a resin composition that is for use as a laser-transmitting resin member in laser welding and capable of being laser-marked can be obtained.

The reason why laser marking is possible is probably that when the polycarbonate resin contains aluminum element, carbonization of the resin components in the molded body surface easily proceeds to allow carbonization in the surface of the molded body to proceed successfully in appearance.

This embodiment is beneficial in that laser welding can be performed without adding a laser-marking agent such as carbon black. Specifically, since laser marking agents absorb the laser radiated during laser welding, conventional resin compositions containing laser marking agents may be difficult to use as laser-transmitting resin members in laser welding. However, in this embodiment, laser marking can be performed without the use of a laser marking agent, thus enabling a resin composition that is for use as a laser-transmitting resin member in laser welding and capable of being laser-marked.

The resin composition of a second example of this embodiment is characterized in that it includes a polyester resin and a polycarbonate resin, the mass ratio between the polyester resin and the polycarbonate resin is 10/90 to 90/10, wherein the total of the polyester resin and the polycarbonate resin is 100 parts by mass, the polycarbonate resin includes a recycled product, and the molecular weight distribution (Mw/Mn) of the polycarbonate resin is 2.8 or more.

The above configuration enables a resin composition that is environmental-friendly and is capable of being laser-welded and/or laser-marked.

In particular, the above configuration improves the compatibility between the polycarbonate resin and the polyester resin, making it possible to provide a resin composition with high transmittance. In addition, the above configuration improves the laser transmittance relatively, and accordingly, the resin composition is suitable for use as a laser-transmitting resin member in laser welding. Further, the above configuration improves the compatibility between the polycarbonate resin and the polyester resin, thus enabling a resin composition with improved laser welding strength in laser welding.

In particular, in this embodiment, the use of the recycled polycarbonate resin does not interfere with the above performance, and therefore, a resin composition can be obtained that has the above performance and is still environmental-friendly.

The details of this embodiment will be described below.

<Polyester Resin>

The resin composition of this embodiment includes a polyester resin.

The type of the polyester resin used in this embodiment is not particularly limited as long as it is a thermoplastic polyester resin. Examples thereof include polybutylene terephthalate resins and polyethylene terephthalate resins, and polybutylene terephthalate resins are preferred.

«Polybutylene Terephthalate Resin»

A polybutylene terephthalate resin is a resin obtained by polycondensing terephthalic acid as the main component of an acid component and 1,4-butanediol as the main component of a diol component. The terephthalic acid as the main component of an acid component means that 50% by mass or more of the acid component is terephthalic acid. Preferably 60% by mass or more, more preferably 70% by mass or more, of the acid component is terephthalic acid, and 80% by mass or more, 90% by mass or more, or 95% by mass or more of the acid component may be terephthalic acid. The 1,4-butanediol as the main component of a diol component means that 50% by mass or more of the diol component is 1,4-butanediol. Preferably 60% by mass or more, more preferably 70% by mass or more, of the diol component is 1,4-butanediol, and 80% by mass or more, 90% by mass or more, or 95% by mass or more of the diol component may be 1,4-butanediol.

When the polybutylene terephthalate resin includes another acid component, examples thereof include isophthalic acid and dimer acid. When the polybutylene terephthalate resin includes another diol component, examples thereof include polyalkylene glycols such as polytetramethylene glycol (PTMG).

When one obtained by copolymerizing polytetramethylene glycol is used as the polybutylene terephthalate resin, the proportion of the tetramethylene glycol component in the copolymer is preferably 3 to 40% by mass, more preferably 5 to 30% by mass, and further preferably 10 to 25% by mass. By setting such a copolymerization proportion, there is a tendency that the balance between laser weldability and heat resistance is better, which is preferred.

When dimer acid-copolymerized polybutylene terephthalate is used as the polybutylene terephthalate resin, the proportion of the dimer acid component in all carboxylic acid components is preferably 0.5 to 30 mol %, more preferably 1 to 20 mol %, and further preferably 3 to 15 mol % in terms of carboxylic acid groups. By setting such a copolymerization proportion, there is a tendency that the balance of laser weldability, long-term heat resistance, and toughness is better, which is preferred.

When isophthalic acid-copolymerized polybutylene terephthalate is used as the polybutylene terephthalate resin, the proportion of the isophthalic acid component in all carboxylic acid components is preferably 1 to 30 mol %, more preferably 1 to 20 mol %, and further preferably 3 to 15 mol % in terms of carboxylic acid groups. By setting such a copolymerization proportion, there is a tendency that the balance of laser weldability, heat resistance, injection moldability, and toughness is better, which is preferred.

For the polybutylene terephthalate resin used in this embodiment, a resin in which 90% by mass or more of the acid component and 90% by mass or more of the diol component are terephthalic acid and 1,4-butanediol, respectively (polybutylene terephthalate homopolymer), or a copolymerized polybutylene terephthalate resin obtained by copolymerizing polytetramethylene glycol, or an isophthalic acid-copolymerized polybutylene terephthalate resin is preferred.

For the intrinsic viscosity of the polybutylene terephthalate resin, one in 0.5 to 2 dL/g is preferred. In terms of moldability and mechanical characteristics, one having an intrinsic viscosity in the range of 0.6 to 1.5 dL/g is more preferred. By using one having an intrinsic viscosity of 0.5 dL/g or more, there is a tendency that the mechanical strength of the obtained molded body improves more. By using one having an intrinsic viscosity of 2 dL/g or less, there is a tendency that the fluidity of the polybutylene terephthalate resin improves to improve the moldability to thereby improve the laser weldability more.

The intrinsic viscosity is a value measured at 30°C in a 1:1 (mass ratio) mixed solvent of tetrachloroethane and phenol.

When two or more polybutylene terephthalate resins are included, the intrinsic viscosity is the intrinsic viscosity of the mixture.

The amount of the terminal carboxy groups of the polybutylene terephthalate resin can be appropriately selected and set, but is usually 60 eq/ton or less, preferably 50 eq/ton or less, and further preferably 30 eq/ton or less. By setting the amount of the terminal carboxy groups at 50 eq/ton or less, the generation of gas during the melting and molding of the polybutylene terephthalate resin can be more effectively suppressed. The lower limit value of the amount of the terminal carboxy groups is not particularly limited, but is usually 5 eq/ton.

When two or more polybutylene terephthalate resins are included, the amount of the terminal carboxy groups is the amount of the terminal carboxy groups of the mixture.

The amount of the terminal carboxy groups of the polybutylene terephthalate resin is a value obtained by dissolving 0.5 g of the polybutylene terephthalate resin in 25 mL of benzyl alcohol and titrating with a 0.01 mol/L sodium hydroxide solution in benzyl alcohol. Examples of the method for adjusting the amount of the terminal carboxy groups include any conventionally known method, such as controlling polymerization conditions including the ratio between starting materials used, polymerization temperature, and pressure reduction method in polymerization, and reacting a terminal-blocking agent.

«Polyethylene terephthalate resin»

The polyethylene terephthalate resin used in this embodiment is a resin obtained by polycondensing terephthalic acid as the main component of an acid component and ethylene glycol as the main component of a diol component. The terephthalic acid as the main component of an acid component means that 50% by mass or more of the acid component is terephthalic acid. Preferably 60% by mass or more, more preferably 70% by mass or more, of the acid component is terephthalic acid, and 80% by mass or more, 90% by mass or more, or 95% by mass or more of the acid component may be terephthalic acid. The ethylene glycol as the main component of a diol component means that 50% by mass or more of the diol component is ethylene glycol. Preferably 60% by mass or more, more preferably 70% by mass or more, of the diol component is ethylene glycol, and 80% by mass or more, 90% by mass or more, or 95% by mass or more of the diol component may be ethylene glycol.

When the polyethylene terephthalate resin includes another acid component, examples thereof include dicarboxylic acids such as phthalic acid, isophthalic acid, naphthalenedicarboxylic acid, 4,4'-diphenyl sulfone dicarboxylic acid, 4,4'-biphenyldicarboxylic acid, 1,4-cyclohexanedicarboxylic acid, 1,3-phenylenedioxydiacetic acid, and structural isomers thereof, malonic acid, succinic acid, and adipic acid, and derivatives thereof, and oxyacids such as p-hydroxybenzoic acid and glycolic acid, or derivatives thereof.

When the polyethylene terephthalate resin includes another acid component, examples of another diol component include aliphatic glycols such as 1,2-propanediol, 1,3-propanediol, 1,4-butanediol, pentamethylene glycol, hexamethylene glycol, and neopentyl glycol, alicyclic glycols such as cyclohexanedimethanol, and aromatic dihydroxy compound derivatives such as bisphenol A and bisphenol S.

Further, the polyethylene terephthalate resin may be one obtained by copolymerizing 1.0 mol % or less, preferably 0.5 mol % or less, and further preferably 0.3 mol % or less of a branched component, for example, a trifunctional acid having ester-forming ability such as tricarballylic acid, trimesic acid, or trimellitic acid, or a tetrafunctional acid having ester-forming ability such as pyromellitic acid, or a trifunctional or tetrafunctional alcohol having ester-forming ability such as glycerin, trimethylolpropane, or pentaerythritol.

The limiting viscosity of the polyethylene terephthalate resin is preferably 0.3 to 1.5 dL/g, more preferably 0.3 to 1.2 dL/g, and further preferably 0.4 to 0.8 dL/g.

The intrinsic viscosity of the polyethylene terephthalate resin is a value measured at 30°C in a 1:1 (mass ratio) mixed solvent of tetrachloroethane and phenol.

The concentration of the terminal carboxy groups of the polyethylene terephthalate resin is preferably 3 to 60 eq/ton, more preferably 5 to 50 eq/ton, and further preferably 8 to 40 eq/ton. By setting the terminal carboxy group concentration at 60 eq/ton or less, gas is not easily generated during the melting and molding of the resin material so that there is a tendency that the mechanical characteristics of the obtained molded body improve. Conversely, by setting the terminal carboxy group concentration at 3 eq/ton or more, there is a tendency that the heat resistance, residence heat stability, and hue of the obtained molded body improve, which is preferred.

The terminal carboxy group concentration of the polyethylene terephthalate resin is a value obtained by dissolving 0.5 g of the polyethylene terephthalate resin in 25 mL of benzyl alcohol and titrating with a 0.01 mol/L sodium hydroxide solution in benzyl alcohol.

<Polycarbonate Resin>

The resin composition of this embodiment includes a polycarbonate resin.

A polycarbonate resin is a homopolymer or copolymer that may be branched, obtained by reacting a dihydroxy compound or a dihydroxy compound and a small amount of a polyhydroxy compound with phosgene or a carbonic acid diester. The method for producing the polycarbonate resin is not particularly limited, and one produced by a conventionally known phosgene method (interfacial polymerization method) or melting method (transesterification method) can be used. The melting method is preferred. The polycarbonate resin obtained by the melting method tends to have a branched structure, and when it is used, the effect of the present invention more effectively exerted.

The dihydroxy compound as a starting material is preferably an aromatic dihydroxy compound, and bisphenol is more preferred. 2,2-Bis(4-hydroxyphenyl)propane (= bisphenol A), tetramethyl bisphenol A, bis(4-hydroxyphenyl)-p-diisopropylbenzene, hydroquinone, resorcinol, 4,4-dihydroxydiphenyl, and the like are further preferred, and bisphenol A is still more preferred. The aromatic dihydroxy compound with one or more tetraalkylphosphonium sulfonates bonded can also be used.

Among those described above, an aromatic polycarbonate resin (bisphenol A type polycarbonate resin) derived from 2,2-bis(4-hydroxyphenyl)propane, or an aromatic polycarbonate copolymer derived from 2,2-bis(4-hydroxyphenyl) propane and another aromatic dihydroxy compound is preferred as the polycarbonate resin. Alternatively, the polycarbonate resin may be a copolymer composed mainly of an aromatic polycarbonate resin, such as a copolymer with a polymer or an oligomer having a siloxane structure. Two or more of the above-described polycarbonate resins may be mixed and used.

In this embodiment, a polycarbonate resin in which 90% by mass or more of the dihydroxy compound, starting material monomer, is 2,2-bis(4-hydroxyphenyl)propane is preferred, and a polycarbonate resin in which 95% by mass or more of the dihydroxy compound is 2,2-bis(4-hydroxyphenyl)propane is more preferred.

In order to adjust the molecular weight of the polycarbonate resin, a monovalent aromatic hydroxy compound can be used, and examples thereof include m- and p-methylphenol, m- and p-propylphenol, p-tert-butylphenol, and p-long chain alkylsubstituted phenol.

In the polycarbonate resin used in this embodiment, the content of aluminum element is preferably 0.50 to 1000.00 ppm by mass per 100 parts by mass of the polycarbonate resin. By setting the content of aluminum element at the lower limit value or more, there is a tendency that the laser marking properties improves more. By setting the content of aluminum element at the upper limit value or less, there is a tendency that the long-term stability of the resin improves. The content of aluminum element is more preferably 1.00 ppm by mass or more, further preferably 1.20 ppm by mass or more, still more preferably 2.00 ppm by mass or more, even more preferably 3.00 ppm by mass or more, and still further preferably 6.00 ppm by mass or more per 100 parts by mass of the polycarbonate resin. The content of aluminum element is more preferably 500.00 ppm by mass or less, further preferably 300.00 ppm by mass or less, still more preferably 100.00 ppm by mass or less, even more preferably 50.00 ppm by mass or less, still further preferably 30.00 ppm by mass or less, even further preferably 15.00 ppm by mass or less, and even particularly preferably 10.00 ppm by mass or less per 100 parts by mass of the polycarbonate resin.

In this embodiment, the polycarbonate resin preferably contains calcium element in an amount of 0.15 to 30.00 ppm by mass per 100 parts by mass of the polycarbonate resin. The content of calcium element is more preferably 0.50 ppm by mass or more, further preferably 1.50 ppm by mass or more, still more preferably 2.00 ppm by mass or more, even more preferably 3.50 ppm by mass or more, and even further preferably 4.00 ppm by mass or more per 100 parts by mass of the polycarbonate resin. By setting the content of calcium element at the lower limit value or more, there is a tendency that the laser marking properties improves more. The content of calcium element is more preferably 30.00 ppm by mass or less, further preferably 25.00 ppm by mass or less, still more preferably 20.0 ppm by mass or less, and even more preferably 17.0 ppm by mass or less per 100 parts by mass of the polycarbonate resin. By setting the content of calcium element at the upper limit value or less, there is a tendency that the long-term stability of the resin improves.

In this embodiment, the polycarbonate resin preferably contains strontium element in an amount of 0.01 to 1.00 ppm by mass per 100 parts by mass of the polycarbonate resin. The content of strontium element is more preferably 0.02 ppm by mass or more per 100 parts by mass of the polycarbonate resin. By setting the content of strontium element at the lower limit value or more, there is a tendency that the laser marking properties improves more. The content of strontium element is more preferably 0.50 ppm by mass or less, further preferably 0.10 ppm by mass or less, still more preferably 0.09 ppm by mass or less, and even more preferably 0.08 ppm by mass or less per 100 parts by mass of the polycarbonate resin. By setting the content of strontium element at the upper limit value or less, there is a tendency that the long-term stability of the resin improves.

In this embodiment, the polycarbonate resin preferably contains barium element in an amount of 0.09 to 10.00 ppm by mass per 100 parts by mass of the polycarbonate resin. The content of barium element is more preferably 0.10 ppm by mass or more, further preferably 0.13 ppm by mass or more, still more preferably 0.15 ppm by mass or more, even more preferably 0.18 ppm by mass or more, and even further preferably 0.20 ppm by mass or more per 100 parts by mass of the polycarbonate resin. By setting the content of barium element at the lower limit value or more, there is a tendency that the laser marking properties improves more. The content of barium element is more preferably 7.00 ppm by mass or less, further preferably 3.00 ppm by mass or less, still more preferably 1.50 ppm by mass or less, and even more preferably 1.00 ppm by mass or less per 100 parts by mass of the polycarbonate resin. By setting the content of barium element at the upper limit value or less, there is a tendency that the long-term stability of the resin improves.

In this embodiment, the polycarbonate resin preferably contains magnesium element in an amount of 0.08 to 20.00 ppm by mass per 100 parts by mass of the polycarbonate resin. The content of magnesium element is more preferably 0.10 ppm by mass or more, further preferably 0.15 ppm by mass or more, still more preferably 0.50 ppm by mass or more, even more preferably 0.70 ppm by mass or more, and even further preferably 1.00 ppm by mass or more per 100 parts by mass of the polycarbonate resin. By setting the content of magnesium element at the lower limit value or more, there is a tendency that the laser marking properties improves more. The content of magnesium element is more preferably 30.00 ppm by mass or less, further preferably 20.00 ppm by mass or less, still more preferably 10.00 ppm by mass or less, and even more preferably 8.00 ppm by mass or less per 100 parts by mass of the polycarbonate resin. By setting the content of magnesium element at the upper limit value or less, there is a tendency that the long-term stability of the resin improves.

In this embodiment, the polycarbonate resin preferably contains zinc element in an amount of 0.05 to 10.00 ppm by mass per 100 parts by mass of the polycarbonate resin. The content of zinc element is more preferably 0.08 ppm by mass or more and further preferably 0.10 ppm by mass or more per 100 parts by mass of the polycarbonate resin. By setting the content of zinc element at the lower limit value or more, there is a tendency that the laser marking properties improves more. The content of zinc element is more preferably 7.00 ppm by mass or less, further preferably 3.00 ppm by mass or less, still more preferably 2.00 ppm by mass or less, and even more preferably 1.00 ppm by mass or less per 100 parts by mass of the polycarbonate resin. By setting the content of zinc element at the upper limit value or less, there is a tendency that the long-term stability of the resin improves.

In this embodiment, the polycarbonate resin preferably contains iron element in an amount of 0.35 to 50.0 ppm by mass per 100 parts by mass of the polycarbonate resin. The content of iron element is more preferably 0.80 ppm by mass or more, further preferably 1.00 ppm by mass or more, still more preferably 2.00 ppm by mass or more, even more preferably 3.00 ppm by mass or more, and still further preferably 5.00 ppm by mass or more per 100 parts by mass of the polycarbonate resin. By setting the content of iron element at the lower limit value or more, there is a tendency that the laser marking properties improves more. The content of iron element is more preferably 35.00 ppm by mass or less, further preferably 20.00 ppm by mass or less, still more preferably 15.00 ppm by mass or less, and even more preferably 10.00 ppm by mass or less per 100 parts by mass of the polycarbonate resin. By setting the content of iron element at the upper limit value or less, there is a tendency that the long-term stability of the resin improves.

In this embodiment, the polycarbonate resin preferably contains manganese element in an amount of 0.07 to 10.00 ppm by mass per 100 parts by mass of the polycarbonate resin. The content of manganese element is more preferably 0.08 ppm by mass or more per 100 parts by mass of the polycarbonate resin. By setting the content of manganese element at the lower limit value or more, there is a tendency that the laser marking properties improves more. The content of manganese element is more preferably 7.00 ppm by mass or less, further preferably 3.00 ppm by mass or less, still more preferably 1.00 ppm by mass or less, even more preferably 0.50 ppm by mass or less, and still further preferably 0.20 ppm by mass or less per 100 parts by mass of the polycarbonate resin. By setting the content of manganese element at the upper limit value or less, there is a tendency that the long-term stability of the resin improves.

In this embodiment, the polycarbonate resin preferably contains at least aluminum element and iron element in the above respective ranges.

The above metallic elements do not necessarily need to be present in the polycarbonate resin as individual elements, but may be contained as part of a compound. In this embodiment, the values found in <Measurement of Amounts of Metallic Elements> described in Examples given later are the amounts of the above-described metallic elements.

The molecular weight distribution (Mw/Mn) of the polycarbonate resin used in this embodiment is preferably 2.8 or more. Such a configuration tends to improve more the laser transmittance and laser printing visibility of the obtained molded article. Furthermore, such a configuration also tends to improve the laser welding strength.

In this embodiment, the molecular weight distribution (Mw/Mn) of the polycarbonate resin is preferably 2.9 or more, more preferably 3.0 or more, and further preferably 3.1 or more. The molecular weight distribution (Mw/Mn) of the polycarbonate resin is preferably 5.0 or less, more preferably 4.0 or less, further preferably 3.7 or less, still more preferably 3.5 or less, and even more preferably 3.3 or less. By setting the above range, there is a tendency that the effect of this embodiment is more effectively exerted.

The viscosity average molecular weight (Mv) of the polycarbonate resin is preferably 5,000 or more, more preferably 10,000 or more, further preferably 13,000 or more, and still more preferably 20,000 or more. Further, it is preferably 21,000 or more, 22,000 or more, 23,000 or more, 25,000 or more, or 26,000 or more. By using one having a viscosity average molecular weight of 5,000 or more, in particular 20,000 or more, there is a tendency that the mechanical strength of the obtained resin composition improves more. The viscosity average molecular weight (Mv) of the polycarbonate resin is preferably 60,000 or less, more preferably 40,000 or less, and further preferably 30,000 or less. By using one having a viscosity average molecular weight of 60,000 or less, there is a tendency that the fluidity of the resin composition improves to improve the moldability.

When the resin composition of this embodiment includes two or more polycarbonate resins, the mixture preferably satisfies the above range.

In this embodiment, the viscosity average molecular weight (Mv) of the polycarbonate resin indicates the value obtained by measuring the viscosity of a solution of the polycarbonate resin in methylene chloride at 20°C using a Ubbelohde viscometer to determine the intrinsic viscosity ($[\eta]$) and performing calculation according to the following Schnell's viscosity formula.

$$[\eta] = 1.23 \times 10^{-4} Mv^{0.83}$$

The melt volume rate (MVR) of the polycarbonate resin at a measurement temperature of 300°C and a measurement load of 1.20 kgf in accordance with ISO 1133 is preferably 1 $cm^3$/10 min or more, more preferably 2 $cm^3$/10 min or more, further preferably 3 $cm^3$/10 min or more, and still more preferably 4 $cm^3$/10 min or more. By setting the MVR of the polycarbonate resin at the lower limit value or more, there is a tendency that the fluidity of the resin during injection molding improves. For the upper limit, the MVR is preferably 13 $cm^3$/10 min or less, more preferably 12 $cm^3$/10 min or less, further preferably 11 $cm^3$/10 min or less, still more preferably 10 $cm^3$/10 min or less, and even more preferably 9 $cm^3$/10 min or less. By setting the MVR of the polycarbonate resin at the upper limit value or less, there is a tendency that the mechanical strength improves.

The polycarbonate resin used in this embodiment may be either a virgin product or a recycled product, but it preferably includes a recycled product.

Examples of the recycled polycarbonate resins include those obtained by material recycling of recovered and used, molded bodies of polycarbonate resin, which involves crushing and alkali cleaning the molded bodies for reuse in fibers, etc., those obtained by chemical recycling (chemical decomposition method), and those obtained by mechanical recycling.

Chemical recycling is the resynthesis of polycarbonate resin following chemical decomposition of recovered used molded bodies of polycarbonate resin back to the starting material level. Mechanical recycling involves, for example, alkali cleaning in the above-described material recycling more rigorously, or vacuum drying at high temperature, and is an approach that makes it possible to remove contaminants from the molded bodies of polycarbonate resin more reliably than material recycling.

For example, foreign matter is removed from used molded bodies of polycarbonate resin, the molded bodies of polycarbonate resin are then crushed and cleaned, and subsequently pelletized with an extruder to obtain recycled polycarbonate resin.

Recycled products usually have higher contents of metallic elements than virgin products. Therefore, they are easily applicable to the resin composition of this embodiment. However, some recycled products do not have high contents of metallic elements.

It goes without saying that in the resin composition of this embodiment, predetermined metallic elements may be blended into virgin products or recycled products with low contents of metallic elements to adjust the contents.

When the resin composition of this embodiment includes a recycled product, the content of the recycled product is preferably 50 parts by mass or more, more preferably 60 parts by mass or more, further preferably 70 parts by mass or more, still more preferably 80 parts by mass or more, and even more preferably 90 parts by mass or more in 100 parts by mass of the polycarbonate resin. By setting the content of the recycled product at the lower limit value or more, recyclability increases. The upper limit value of the content of the recycled product may be 100 parts by mass per 100 parts by mass of the polycarbonate resin.

<Mass Ratio between Polyester Resin and Polycarbonate Resin>

Next, the ratio between the polyester resin and the polycarbonate resin in the resin composition of this embodiment will be described.

In the resin composition of this embodiment, the mass ratio between the polyester resin and the polycarbonate resin is 10/90 to 90/10, preferably 20/80 to 90/10, more preferably 30/70 to 90/10, further preferably 40/60 to 90/10, still more preferably 50/50 to 90/10, even more preferably 50/50 to 80/20, even further preferably 50/50 to 75/35, even particularly preferably 55/45 to 75/35, and further particularly preferably 55/45 to 70/30, in 100 parts by mass of the total of the polyester resin and the polycarbonate resin.

In the resin composition of this embodiment, the total of the polyester resin and the polycarbonate resin preferably accounts for 80% by mass or more of the resin components included in the resin composition, more preferably accounts for 85% by mass or more, further preferably accounts for 90% by mass or more, still more preferably accounts for 95% by mass or more, and even more preferably accounts for 98% by mass or more.

Further, in the resin composition of this embodiment, the total of the polyester resin and the polycarbonate resin preferably accounts for 55% by mass or more of the resin composition, further preferably accounts for 60% by mass or more, still more preferably accounts for 65% by mass or more, and even more preferably accounts for 68% by mass or more. The total amount of the polyester resin and the polycarbonate resin in the resin composition is preferably 80% by mass or less, and more preferably 75% by mass or less.

The resin composition of this embodiment may include only one polyester resin and one polycarbonate resin, or two or more of each. When the resin composition of this embodiment includes two or more polyester resins and polycarbonate resins, the total amount is preferably in the above range.

<Inorganic Filler>

The resin composition of this embodiment preferably further includes an inorganic filler. When the resin composition of this embodiment includes an inorganic filler, preferably a fibrous or scale-like inorganic filler, more preferably glass fibers and/or glass flakes, there is a tendency that the mechanical strength improves and the heat-resistant strength also increases, improving the durability of the laser-welded body more.

The inorganic filler that can be contained and used in the resin composition of this embodiment has the effect of improving the mechanical properties of a resin composition obtained by blending the inorganic filler into a resin, and commonly used inorganic fillers for plastics can be used. Preferably fibrous inorganic fillers such as glass fibers, carbon fibers, basalt fibers, wollastonite, and potassium titanate fibers can be used. Granular or amorphous fillers such as calcium carbonate, titanium oxide, feldspar-based minerals, clay, organoclay, and glass beads; plate-like fillers such as talc; and scale-like inorganic fillers such as glass flakes, mica, and graphite can also be used. Especially, in terms of mechanical strength, rigidity, and heat resistance, the resin composition of this embodiment preferably includes glass fibers and/or glass flakes, and particularly, it is preferable to use glass fibers. Either glass fibers having a round cross-sectional shape or those having an irregular cross-sectional shape can be used.

For the inorganic filler, one surface-treated with a surface treatment agent such as a coupling agent is more preferably used. Glass fibers with a surface treatment agent adhered thereto are excellent in durability, moist heat resistance, hydrolysis resistance, and heat shock resistance and therefore preferred.

As the surface treatment agent, any conventionally known one can be used, and specific preferred examples include silane coupling agents such as aminosilane-based, epoxysilane-based, allylsilane-based, and vinylsilane-based silane coupling agents. Among these, aminosilane-based surface treatment agents are preferred, and specific preferred examples include γ-aminopropyltriethoxysilane, γ-aminopropyltrimethoxysilane, and γ-(2-aminoethyl)aminopropyltrimethoxysilane.

Preferred examples of other surface treatment agents include epoxy resin-based surface treatment agents such as a novolac type, and bisphenol A type epoxy resin-based surface treatment agents, and particularly treatment with a novolac type epoxy resin-based surface treatment agent is preferred.

The silane-based surface treatment agent or the epoxy resin-based surface treatment agent may be used alone, or a plurality of the silane-based surface treatment agents or a plurality of the epoxy resin-based surface treatment agents may be used. Both the silane-based surface treatment agent and the epoxy resin-based surface treatment agent are also preferably used in combination. The glass fibers in this embodiment mean a fibrous glass material, and more specifically glass fibers having a chopped shape obtained by bundling 1,000 to 10,000 glass fibers and cutting the bundled glass fibers to a predetermined length is preferred.

For the glass fibers in this embodiment, those having a number average fiber length of 0.5 to 10 mm are preferred, and those having a number average fiber length of 1 to 5 mm are more preferred. By using glass fibers having such a number average fiber length, the mechanical strength can be more improved. For the number average fiber length, glass fibers whose fiber lengths are to be measured are randomly extracted in an image obtained by observation under an optical microscope, their long sides are measured, and the number average fiber length is calculated from the found values. The observation magnification is 20X and the number of glass fibers to be measured is 1,000 or more. The number average fiber length generally corresponds to the cut length.

The cross sections of the glass fibers may have any shape such as a circle, an ellipse, an oval, a rectangle, a shape of a rectangle with semicircles joined to both short sides thereof, or an eyebrow shape, but a circle is preferred. The circle here is intended to include a circle in a geometric sense and also those usually referred to as circles in the technical field of this embodiment.

In terms of the lower limit, the number average fiber diameter of the glass fibers is preferably $4.0\ \mu m$ or more, more preferably $4.5\ \mu m$ or more, and further preferably $5.0\ \mu m$ or more. In terms of the upper limit, the number average fiber diameter of the glass fibers is preferably $15.0\ \mu m$ or less, more preferably $14.0\ \mu m$ or less. By using glass fibers having a number average fiber diameter in such a range, there is a tendency that a molded body better in mechanical strength is obtained. The number average fiber diameter of the glass fibers is calculated from found values obtained by randomly extracting glass fibers whose fiber diameters are to be measured, in an image obtained by observation under an electron microscope, and measuring fiber diameters near the central portions. The observation magnification is 1,000X and the number of glass fibers to be measured is 1,000 or more. The number average fiber diameter of glass fibers having a cross section other than a circular cross section is the number average fiber diameter when the shape of the cross section is converted into a circle having the same area as the area of the cross section.

For the glass fibers, fibers obtained by melt-spinning glass such as generally supplied E glass (Electrical glass), C glass (Chemical glass), A glass (Alkali glass), S glass (High strength glass), D glass, R glass, and alkali-resistant glass are used. Any glass that can be formed into glass fibers can be used, and the glass is not particularly limited. In this embodiment, E glass is preferably included.

The glass fibers used in this embodiment is preferably surface-treated with a surface treatment agent such as a silane coupling agent, for example, $\gamma$-methacryloxypropyltrimethoxysilane, $\gamma$-glycidoxypropyltrimethoxysilane, or $\gamma$-aminopropyltriethoxysilane. The amount of the surface treatment agent adhering is preferably 0.01 to 1% by mass of the glass fibers. Those surface-treated with a lubricant such as a fatty acid amide compound or a silicone oil, an antistatic agent such as a quaternary ammonium salt, a resin having film-forming ability such as an epoxy resin or a urethane resin, or a mixture of a resin having film-forming ability and a heat stabilizer, a flame retardant, and the like can also be used as needed.

The glass fibers are available as a commercial product. Examples of the commercial product include T-286H, T-756H, T-127, and T-289H manufactured by Nippon Electric Glass Co., Ltd., DEFT2A manufactured by Owens Corning, HP3540 manufactured by PPG, and CSG3PA820 manufactured by Nitto Boseki Co., Ltd.

The content of the inorganic filler (preferably the glass fibers) in the resin composition of this embodiment is preferably 10 parts by mass or more, more preferably 15 parts by mass or more, further preferably 20 parts by mass or more, still more preferably 25 parts by mass or more, and even more preferably 30 parts by mass or more per 100 parts by mass of the thermoplastic resin (the total of the polyester resin and the polycarbonate resin). By setting the content of the inorganic filler (preferably the glass fibers) at the lower limit value or more, there is a tendency that the strength of the base material of the laser-welded body increases, and that the heat resistance of the laser-welded body increases. In terms of the upper limit value, the content of the inorganic filler is preferably 70 parts by mass or less, more preferably 60 parts by mass or less, and further preferably 50 parts by mass or less per 100 parts by mass of the thermoplastic resins. By setting the content of the inorganic filler at the upper limit value or less, there is a tendency that the welding strength of the interface portion increases.

The content of the inorganic filler (preferably the glass fibers) in the resin composition of this embodiment is preferably 20% by mass or more, more preferably 25% by mass or more, of the resin composition. The content of the inorganic filler (preferably the glass fibers) is preferably 45% by mass or less, more preferably 40% by mass or less, more preferably 35% by mass or less, and further preferably 32% by mass or less.

The resin composition of this embodiment may include only one inorganic filler (preferably glass fibers) or two or more inorganic fillers (preferably glass fibers). When the resin composition of this embodiment includes two or more inorganic fillers (preferably glass fibers), the total amount is preferably in the above ranges.

<Stabilizer>

The resin composition of this embodiment preferably contains a stabilizer. As the stabilizer, a phosphorus-based stabilizer and a phenol-based stabilizer are preferred, and a phosphorus-based stabilizer is more preferred. When the resin composition of this embodiment includes a phosphorus-based stabilizer, resin deterioration during processing and in high-temperature environments can be suppressed.

As the phosphorus-based stabilizer, any known one can be used. Specific examples include oxoacids of phosphorus such as phosphoric acid, phosphonic acid, phosphorous acid, phosphinic acid, and polyphosphoric acid; metal acid pyrophosphates such as sodium acid pyrophosphate, potassium acid pyrophosphate, and calcium acid pyrophosphate; phosphates of group 1 or group 2 metals such as potassium phosphate, sodium phosphate, cesium phosphate, and zinc phosphate; organophosphate compounds, organophosphite compounds, and organophosphonite compounds, and organophosphite compounds are particularly preferred.

Examples of the phenol-based stabilizer include hindered phenol-based antioxidants.

For the details of these, the description in the paragraphs 0105 to 0111 of International Publication No. WO 2020/013127 can be referred to, and the contents of this are incorporated herein.

The content of the stabilizer is usually 0.001 parts by mass or more, preferably 0.01 parts by mass or more, and usually 2 parts by mass or less, preferably 1.0 part by mass or less, per 100 parts by mass of the total of the polyester resin and the polycarbonate resin. By setting the content of the stabilizer at the lower limit value of the range or more, the effect as the stabilizer can be more effectively obtained. By setting the content of the stabilizer at the upper limit value of the range or less, the effect does not peak, and such content is thus economical.

The resin composition of this embodiment may include only one stabilizer or two or more stabilizers. When the resin composition of this embodiment includes two or more stabilizers, the total amount is preferably in the above range.

<Release Agent>

The resin composition of this embodiment may include a release agent. Examples of the release agent include montanate waxes, polyolefin waxes, higher fatty acids, ester compounds, and ethylenebis-stearoamide, and at least one selected from montanate waxes, polyolefin waxes, and ethylenebis-stearoamide is preferred.

For the release agent, specifically, the description in the paragraphs 0063 to 0077 of Japanese Patent Laid-Open No. 2018-070722 and the description in the paragraphs 0090 to 0098 of Japanese Patent Laid-Open No. 2019-123809 can be referred to, and the contents of these are incorporated herein.

When the resin composition of this embodiment includes a release agent, its content is preferably 0.01 parts by mass or more, and more preferably 0.08 parts by mass or more, per 100 parts by mass of the total of the polyester resin and the polycarbonate resin. For the upper limit value, the content of the release agent is preferably 5.0 parts by mass or less, and more preferably 1.0 part by mass or less, per 100 parts by mass of the total of the polyester resin and the polycarbonate resin.

The resin composition of this embodiment may include only one release agent or two or more release agents. When the resin composition of this embodiment includes two or more release agents, the total amount is preferably in the above range.

<Colorant>

The resin composition of this embodiment may include a colorant (dye and/or pigment). When the resin composition of this embodiment includes a colorant, the designability of the obtained molded body can increase. The colorant may be either a dye or a pigment, but a dye is preferred.

The dye used in this embodiment is preferably a black dye and/or a black dye composition. The black dye composition means a dye composition including two or more chromatic dyes such as red, blue, and green dyes combined to exhibit a black color. A first example of the black dye composition includes a green dye and a red dye. A second example of the black dye composition includes a red dye, a blue dye, and a yellow dye.

When the resin composition of this embodiment is used for a light-transmissive resin composition for laser welding, the colorant (preferably the dye) is a light-transmissive coloring matter. The light-transmissive coloring matter refers to, for example, such a coloring matter that gives a light transmittance of 20.0% or more in the following procedure: a polybutylene terephthalate resin (for example, NOVADURAN (R) 5008), 30% by mass of glass fibers (for example, trade name: T-127 manufactured by Nippon Electric Glass Co., Ltd.), and 0.2% by mass of a coloring matter (a coloring matter considered as a light-transmissive coloring matter) are blended so that the total is 100% by mass, and the light transmittance is measured by the method described in the paragraph 0105 of International Publication No. WO 2021/225154. Specific examples of the light-transmissive coloring matter include phthalocyanine, aniline black, phthalocyanine, porphyrin, perinone, quaterrylene, azo, azomethine, anthraquinone, pyrazolone, squaric acid derivatives, perylene, chromium complexes, and immonium. Azomethine, anthraquinone, and perinone are preferred, and among them, anthraquinone and perinone are more preferred.

For example, when the resin composition of this embodiment that contains the light-transmissive coloring matter in this embodiment is molded to a thickness of 1.5 mm, the light transmittance at a wavelength of 1064 nm can be 20.0% or more, further 40.0% or more, and particularly 50.0% or more or 60.0% or more. For the upper limit, the light transmittance is ideally 100% but may be 90% or less.

The wavelength of 1064 nm is an example of a laser wavelength used for laser welding, and a laser transmittance of 20% or more at such a wavelength means that laser welding can be performed well.

Examples of commercial products of the light-transmissive dye include Plast Yellow 8000, Plast Red M 8315, Plast Red 8370, and Oil Green 5602, which are colorants manufactured by ARIMOTO CHEMICAL Co., Ltd., Macrolex Yellow 3G, Macrolex Red EG, and Macrolex Green 5B, which are colorants manufactured by LANXESS, KP Plast HK, KP Plast Red HG, KP Plast Red H2G, KP Plast Blue R, KP Plast Blue GR, and KP Plast Green G, which are manufactured by Kiwa Chemical Industry Co., Ltd.

The coloring matters described in Japanese Patent No. 4157300 and the coloring matters described in Japanese Patent No. 4040460 can also be used, and the contents of these are incorporated herein.

Examples of the pigment used in this embodiment include inorganic pigments (black pigments such as carbon black (for example, acetylene black, lampblack, thermal black, furnace black, channel black, and ketjen black), red pigments such as iron oxide red, orange pigments such as molybdate orange, and white pigments such as titanium oxide) and organic pigments (yellow pigments, orange pigments, red pigments, blue pigments, green pigments, and the like). Black pigments are preferred, and carbon black is more preferred.

When the resin composition of this embodiment includes a pigment, it is preferable to make the pigment into a masterbatch with a thermoplastic resin (preferably a polyester resin, more preferably a polybutylene terephthalate resin) for use. The concentration of the pigment in the masterbatch is preferably 1 to 50% by mass.

When the resin composition of this embodiment includes a colorant, its content is preferably 0.01 parts by mass or more, more preferably 0.05 parts by mass or more, further preferably 0.1 parts by mass or more, per 100 parts by mass of the total of the polyester resin and the polycarbonate resin. By setting the content of the colorant at the lower limit value or more, the coloring effect is more effectively exerted. For the upper limit value, the content of the colorant is preferably 4 parts by mass or less, more preferably 3 parts by mass or less, further preferably 2 parts by mass or less, and still more preferably 1 part by mass or less, per 100 parts by mass of the total of the polyester resin and the polycarbonate resin. By setting the content of the colorant at the upper limit value or less, there is a tendency that the mechanical strength of the obtained molded body improves more.

The resin composition of this embodiment may include only one colorant or two or more colorants. When the resin composition of this embodiment includes two or more colorants, the total amount is preferably in the above range.

The resin composition of this embodiment may include substantially no pigment. The expression "include substantially no pigment" means that its content is, for example, less than 0.1 parts by mass per 100 parts by mass of the total of the polyester resin and the polycarbonate resin. The content of the pigment is preferably 0.01 parts by mass or less, more preferably 0.001 parts by mass or less, further preferably 0.0001 parts by mass or less, and still more preferably 0.00001 parts by mass or less.

The resin composition of this embodiment may include substantially no carbon black. The expression "include substantially no carbon black" means that its content is, for example, less than 0.1 parts by mass per 100 parts by mass of the total of the polyester resin and the polycarbonate resin. The content of the carbon black is preferably 0.01 parts by mass or less, more preferably 0.001 parts by mass or less, further preferably 0.0001 parts by mass or less, and still more preferably 0.00001 parts by mass or less.

The resin composition of this embodiment may include substantially no laser marking agent. The expression "include substantially no laser marking agent" means that its content is, for example, less than 0.1 parts by mass per 100 parts by mass of the total of the polyester resin and the polycarbonate resin. The content of the laser marking agent is preferably 0.01 parts by mass or less, more preferably 0.001 parts by mass or less, further preferably 0.0001 parts by mass or less, and still more preferably 0.00001 parts by mass or less.

<Other Components>

The resin composition of this embodiment may contain other components as needed, in addition to those described above, as long as the desired various physical properties are not significantly impaired. Examples of other components include various resin additives. One of other components may be contained, or two or more other components may be contained in any combination and ratio.

Specific examples of resin additives include a reactive compound, a nucleating agent, a flame retardant, a flame retardant aid, a filler, an antistatic agent, an antifogging agent, a fluidity-improving agent, a plasticizer, a dispersing agent, and an antimicrobial agent.

In the resin composition of this embodiment, the total of the polyester resin, the polycarbonate resin, and the inorganic filler (preferably the glass fibers) preferably accounts for 95% by mass or more of the resin composition, and more preferably accounts for 98% by mass or more.

<Method for Producing Resin Composition>

The resin composition of this embodiment can be produced by an ordinary method for the preparation of a resin composition. Usually, components and a variety of additives added as desired are put together, well mixed, and then melted and kneaded by a single-screw or twin-screw extruder. It is also possible to supply components to an extruder using a feeder, without previously mixing them or after previously mixing only some of them, and melt and knead them to prepare the resin composition of this embodiment. It is possible to melt and knead some components such as a colorant with a thermoplastic resin to prepare a masterbatch, then blend the remaining components thereinto, and melt and knead the blend.

When an inorganic filler is used, it is also preferably supplied from a side feeder in the middle of the cylinder of an extruder.

The heating temperature in melting and kneading can be usually appropriately selected from the range of 220 to 300°C. When the temperature is too high, decomposition gas is easily generated, which may cause opacification. Therefore, it is desirable to select a screw configuration taking shear heat generation and the like into account. In view of suppressing decomposition during kneading and during molding in a subsequent step, the use of an antioxidant and a heat stabilizer is desired.

<Molded Body and Method for Producing Molded Body>

The resin composition in this embodiment is molded according to a known method. Specifically, the molded body of this embodiment is formed from the resin composition or pellets of this embodiment.

The method for producing a molded body is not particularly limited, and a molding method generally adopted for a polyester resin composition can be arbitrarily adopted. Examples thereof include an injection molding method, an ultrahigh speed injection molding method, an injection compression molding method, a two-color molding method, a hollow molding method such as gas assist, a molding method involving use of a heat-insulating mold, a molding method involving use of a rapidly heated mold, foaming (also including a supercritical fluid), insert molding, an IMC (in-mold coating) molding method, an extrusion method, a sheet molding method, a thermoforming method, a rotational molding method, a laminate molding method, a press molding method, and a blow molding method, and especially injection molding is preferred.

For the details of injection molding, the description in the paragraphs 0113 to 0116 of Japanese Patent No. 6183822 can be referred to, and the contents of these are incorporated herein.

<Laser Marking Method>

The molded body formed from the resin composition of this embodiment can be a resin composition capable of being laser-marked. That is, the resin composition, pellets, or molded body of this embodiment are preferably used for laser marking.

By laser marking, the molded body can be provided with letters, a sign, a bar code, a QR code (R), a drawing, a pattern, or the like. For the laser marking method, known methods can be widely adopted.

For the laser light used in the laser marking method, one of 500 nm or more is more preferred. In terms of the upper limit value of the laser oscillation wavelength, one of 1200 nm or less is more preferred.

Specifically, in applications for color printing on a molded body, a laser marker having a wavelength of 1,064 nm, 1090 nm, 1060 nm, or the like is used. It is also possible to use a laser marker of a type in which high power light is applied to crystals such as neodymium-modified yttrium-aluminum-garnet (YAG) or neodymium-modified yttrium-vanadium tetroxide (Nd:YVO$_4$ to generate a laser, followed by amplifying the laser by back-and-forth reflection by a mirror and converting it into a pulse laser by Q switch equipment. It is also possible to use a laser marker of a fiber type (a type in which laser light is generated and amplified using a plurality of laser diodes (LDs) at low power for fibers with ytterbium injected thereinto), which has been becoming the mainstream in recent years. A green laser marker having a wavelength of 532 nm can also be used.

The laser beam as the laser marker may be in a single mode or a multimode, and one having a narrowed beam diameter of, for example, 20 to 40 $\mu$m, or one having a wide beam diameter of, for example, 80 to 100 $\mu$m can also be used. A laser beam in a single mode having a beam diameter of 20 to 40 $\mu$m is preferred because marking can be performed with good contrast.

<Laser Welding>

The resin composition of this embodiment can be used for a kit for laser welding in combination with a light-absorptive resin composition. Thus, the resin composition of this embodiment plays a role as a light-transmissive resin composition, and a molded body formed from such a light-transmissive resin composition can be used as a transmitting resin member for laser light in laser welding. Then, the above-described transmitting resin member can be used as a laser-welded body by laser welding with a molded body formed from a light-absorptive resin composition (an absorbing resin member for laser light in laser welding). Here, the light-absorptive resin composition includes a thermoplastic resin and a light-absorptive coloring matter (for example, carbon black). The light-absorptive resin composition may further include an inorganic filler.

When the resin composition of this embodiment is made into a molded body, the molded body is capable of being laser-marked, and is therefore preferably used as a resin composition that is capable of being laser-marked and for a transmitting resin member in laser welding.

For the details of the method for laser welding and the light-absorptive resin composition, the description in the paragraphs 0083 to 0092 of International Publication No. WO 2021/225154 can be referred to, and the contents of these are incorporated herein.

The laser light source used for laser welding can be selected according to the light absorption wavelength of the light-absorptive coloring matter, and a laser having a wavelength in the range of 800 to 1100 nm is preferred. Examples of the type of the laser light to be radiated include solid-state lasers, fiber lasers, semiconductor lasers, gas lasers, and liquid lasers. For example, YAG (yttrium-aluminum-garnet crystal) lasers (wavelength 1064 nm, 1070 nm), or LD (laser diode) lasers (wavelength 808 nm, 840 nm, 940 nm, 980 nm) can be preferably used. Especially, laser light having wavelengths of 940 nm, 980 nm, and 1070 nm is preferred.

<Uses>

The resin composition or molded body of this embodiment can be applied to a variety of applications, specifically, various storage containers, components of electrical and electronic equipment, components of office automation (OA) equipment, components of household electrical equipment, components of machine mechanism, components of vehicle mechanism, and others. Particularly, the resin composition of this embodiment can be suitably used for food containers, drug containers, containers for oil and fat product, hollow components of vehicle (various tanks, intake manifold components, and camera housings), electrical components of vehicle (various control units, ignition coil components, and the like), motor components, various sensor components, connector components, switch components, breaker components, relay components, coil components, transformer components, lamp components, and the like.

Particularly, the laser-welded body of this embodiment is preferably used for in-vehicle camera components, components of sensor case, motor components, and components for electronic control. More specifically, the laser-welded article of this embodiment is suitable for in-vehicle camera components and in-vehicle camera modules including in-vehicle camera components, housings for millimeter wave radars, housings for ECU cases, housings for sensor cases for sonar sensors and the like, and housings for motor components such as electric parking brakes.

[Examples]

The present invention will be more specifically described below by giving Examples. The materials, amounts used, proportions, details of treatment, treatment procedures, and others shown in the following Examples can be appropriately changed without departing from the spirit of the present invention. Therefore, the scope of the present invention is not limited to the specific examples shown below.

If the measurement equipment and the like used in the Examples are not available because of, for example, discontinued models, measurement can be performed using another equipment having equivalent performance.

1. Materials

The following materials were used. PBT is an abbreviation for polybutylene terephthalate resin.

[Table 1-1]

| Abbreviation | Details |
|---|---|
| PBT | Polybutylene terephthalate resin, manufactured by Mitsubishi Engineering-Plastics Corporation, trade name: NOVADURAN "5008", intrinsic viscosity: 0.85 dL/g |
| R-PC1 | Recycled polycarbonate resin "PC3011", manufactured by Aucell MVR=5 $cm^3$/10min. Mv = 26,700 Mw/Mn=3.1 |
| R-PC2 | Recycled polycarbonate resin "PC2010ANC" manufactured by Aucell MVR=14 $cm^3$/10min. Mv=22,600 Mw/Mn=3.1 |
| R-PC3 | Recycled polycarbonate resin "PCRGAWB" manufactured by Hongyu MVR=8 $cm^3$/10min. Mv=25,400 Mw/Mn=3.1 |
| R-PC4 | Recycled polycarbonate resin "MJ-321" manufactured by Aucell MVR=8 $cm^3$/10min. Mv=21,600 Mw/Mn=2.8 |

[Table 1-2]

| Abbreviation | Details |
|---|---|
| V-PC1 | Polycarbonate resin manufactured by Mitsubishi Engineering-Plastics Corporation NOVAREX "M7027BF/NA" MVR=3 cm$^3$/10min. Mv=26,500 Mw/Mn=3.1 |
| V-PC2 | lupilon "S-3000F" manufactured by Mitsubishi Engineering-Plastics Corporation MVR=16 cm$^3$/10min. Mv=22,000 Mw/Mn=2.5 |
| Stabilizer 1 | Phosphorus-based stabilizer "AX-71", manufactured by ADEKA Corporation |
| Stabilizer 2 | Hindered phenol-based stabilizer Adekastab AO-60, manufactured by ADEKA Corporation |
| Release agent | Polyethylene wax "100P", manufactured by Mitsui Chemicals, Inc. |
| Glass fibers | "T187", manufactured by Nippon Electric Glass Co., Ltd. |
| Colorant 1 | PBT-based masterbatch for coloring "e-BINDLTW8904" manufactured by Orient Chemical Industries Co., Ltd. |
| Colorant 2 | Carbon black masterbatch "RCB20" manufactured by Mitsubishi Engineering-Plastics Corporation, carbon black concentration 20% by mass, PBT-based |

<Measurement of Weight Average Molecular Weight (Mw) and Number Average Molecular Weight (Mn)>

The molecular weight was measured using HLC-8320GPC/EcoSEC (manufactured by TOSOH Corporation). The measurement conditions are as follows.

Columns: Shodex KF-G + KF-805L $\times$ 3 + KF-800D

Detector: UV detector 254 nm

Column temperature: 40°C

Eluent: tetrahydrofuran (THF)

The amounts of metallic elements per 100 parts by mass of the various polycarbonate resins in Table 1 above are shown below. The unit for the metallic elements is ppm by mass.

[Table 2]

| Element | R-PC1 | R-PC2 | R-PC3 | R-PC4 | V-PC1 | V-PC2 |
|---|---|---|---|---|---|---|
| Ca | 4.80 | 1.30 | 16.00 | 9.20 | 0.14 | 0.13 |
| Sr | 0.02 | < | 0.07 | 0.02 | < | < |
| Ba | 0.23 | < | 0.81 | 0.23 | < | < |
| Mg | 1.20 | 0.07 | 5.10 | 0.72 | < | < |
| Al | 8.90 | 0.40 | 3.30 | 1.30 | < | < |
| Zn | 0.13 | < | 0.70 | 0.17 | < | < |
| Fe | 6.20 | 0.34 | 9.80 | 5.90 | < | < |
| Mn | 0.10 | < | 0.17 | 0.06 | < | < |
| Total | 21.58 | 2.11 | 35.95 | 17.60 | 0.14 | 0.13 |

<Measurement of Amounts of Metallic Elements>

Qualitative/semi-quantitative analysis of the metallic elements in a polycarbonate resin was performed by ICP emission spectrometry. In this case, a pretreatment was performed in which 200 mg of the sample was weighed and subjected to Kjeldahl wet digestion (sulfuric acid/nitric acid, sulfuric acid/hydrogen peroxide), followed by volumetric dilution to 50 mL, and then the ICP emission spectrometry was performed by an acid concentration matching single-point calibration method. The unit was indicated in ppm by mass.

The ICP emission spectrometry was performed by axial/radial photometry using "iCAP76000uo" manufactured by Thrmo Fisher Scientific.

2. Examples 1-1 to 1-5 and Comparative Examples 1-1 to 1-4

<Compound>

The components, except for the glass fibers, shown in Table 1-1 and Table 1-2 were uniformly mixed in the proportions (parts by mass) shown in Table 3-1 or Table 3-2 using a tumbler mixer. The obtained mixture was supplied to a twin-screw extruder ("TEX30α" manufactured by The Japan Steel Works, Ltd.) through the main feed port. The cylinder setting temperature in the first kneading section was 260°C, and the glass fibers were supplied from the side feeder. The cylinder temperature after the addition of glass fibers was set at 240°C, and a resin composition melted and kneaded under the conditions of a discharge of 40 kg/h and a screw rotation speed of 200 rpm was quenched in a water tank and pelletized using a pelletizer to obtain pellets of the resin composition.

<Laser Printing Visibility>

The pellets obtained as described above were dried at 120°C for 5 hours, and then a 60 mm square, 1.5 mm thick plate-like molded body was injection-molded using an injection molding machine ("NEX80" manufactured by Nissei Plastic Industrial Co., Ltd.) under the conditions of a cylinder temperature of 260°C and a mold temperature of 80°C. On the surface of the obtained plate molded body, laser marking was performed using a laser marking apparatus ("LP-Z130" manufactured by Panasonic Industrial Devices SUNX Co., Ltd.) under the conditions of a scan speed of 200 mm/s, a printing pulse period of 50 μs, and a line width of 0.1 mm, and the visibility of the laser-marked area was visually evaluated as follows. The measurement was performed by five experts and determined by majority vote.

> A: The boundary between printed area and non-printed area is clear and free from blurring.
> B: There is a lot of blurring, and it is difficult to distinguish the boundary between printed area and non-printed area.

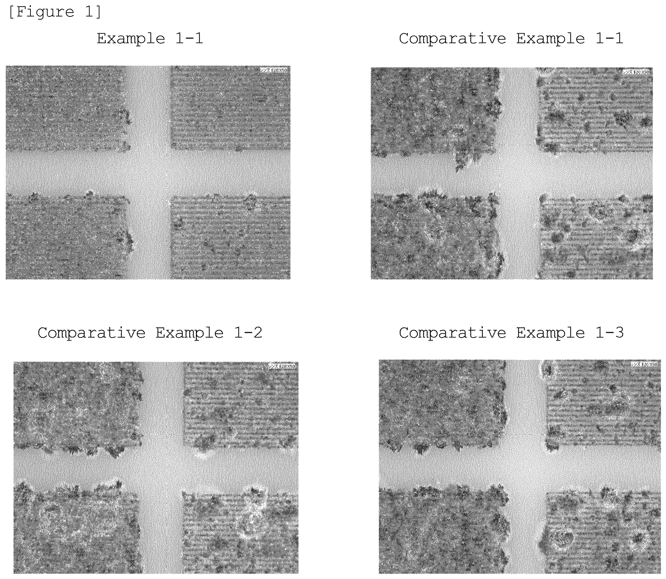

The photographs taken after laser printing in Example 1-1 and Comparative Examples 1-1 to 1-3 are shown in Figure 1. In Example 1-1, the boundary between printed area and non-printed area was clear and free from blurring, and the laser printing was performed clearly. In contrast, there were a lot of blurring in Comparative Examples 1-1 to 1-3, whereby it was difficult to distinguish the boundary between printed area and non-printed area, indicating inferior laser printability accuracy.

<Tensile Strength and Tensile Modulus>

The resin pellets obtained as described above were dried at 120°C for 5 hours, and then an ISO multipurpose test piece (4 mm thick) was injection-molded using an injection molding machine ("J85AD" manufactured by The Japan Steel Works, Ltd.) under the conditions of a cylinder temperature of 250°C and a mold temperature of 80°C.

On the molded multipurpose ISO multipurpose test piece, the tensile strength (unit: MPa) and the tensile modulus (unit: MPa) were measured in accordance with ISO 527-1 and ISO 527-2.

<Light Transmittance>

The pellets obtained as described above were dried at 120°C for 5 hours, and then a 60 mm square, 1.5 mm thick plate-like molded body was injection-molded using an injection molding machine ("NEX80" manufactured by Nissei Plastic Industrial Co., Ltd.) under the conditions of a cylinder temperature of 260°C and a mold temperature of 80°C. The light transmittance (unit: %) of the obtained plate was measured at 1064 nm using an ultraviolet-visible spectrophotometer at a point 45 mm from the gate and at the center of the test plate width.

For the ultraviolet-visible spectrophotometer, "UV-3100PC" with an integrating sphere manufactured by SHIMADZU CORPORATION was used.

[Table 3-1]

| | | Example 1-1 | Example 1-2 | Example 1-3 | Example 1-4 | Example 1-5 |
|---|---|---|---|---|---|---|
| PBT | | 41.6 | 40.9 | 40.9 | 41.6 | 41.6 |
| R-PC1 | | 27.8 | 27.3 | 27.3 | | |
| R-PC2 | | | | | | |
| R-PC3 | | | | | 27.8 | |
| R-PC4 | | | | | | 27.8 |
| V-PC1 | | | | | | |
| V-PC2 | % by mass | | | | | |
| Stabilizer 1 | | 0.1 | 0.1 | 0.1 | 0.1 | 0.1 |
| Stabilizer 2 | | 0.2 | 0.2 | 0.2 | 0.2 | 0.2 |
| Release agent | | 0.3 | 0.3 | 0.3 | 0.3 | 0.3 |
| Glass fibers | | 30.0 | 30.0 | 30.0 | 30.0 | 30.0 |
| Colorant 1 | | | 1.3 | | | |
| Colorant 2 | | | | 1.0 | | |
| Laser printing visibility | - | A | A | A | A | A |
| Tensile strength | MPa | 140 | 138 | 133 | 137 | 137 |
| Tensile modulus | MPa | 9370 | 8940 | 9220 | 10260 | 10120 |
| Light transmittance | % | 62 | 64 | - | 63 | 62 |

[Table 3-2]

| | | Comparative Example 1-1 | Comparative Example 1-2 | Comparative Example 1-3 | Comparative Example 1-4 |
|---|---|---|---|---|---|
| PBT | | 41.6 | 41.6 | 41.6 | 40.9 |
| R-PC1 | | | | | |
| R-PC2 | | 27.8 | | | |
| R-PC3 | | | | | |
| R-PC4 | | | | | |
| V-PC1 | | | 27.8 | | 27.3 |
| V-PC2 | % by mass | | | 27.8 | |
| Stabilizer 1 | | 0.1 | 0.1 | 0.1 | 0.1 |
| Stabilizer 2 | | 0.2 | 0.2 | 0.2 | 0.2 |
| Release agent | | 0.3 | 0.3 | 0.3 | 0.3 |
| Glass fibers | | 30.0 | 30.0 | 30.0 | 30.0 |
| Colorant 1 | | | | | 1.3 |
| Colorant 2 | | | | | |
| Laser printing visibility | - | B | B | B | B |
| Tensile strength | MPa | 139 | 141 | 141 | 140 |
| Tensile modulus | MPa | 9390 | 9380 | 9200 | 8960 |
| Light transmittance | % | 56 | 66 | 57 | 69 |

As is clear from the above results, the molded bodies formed from the resin compositions of this embodiment had excellent laser printability (Examples 1-1 to 1-5). Further, the molded bodies also had excellent mechanical strength. It was also found that the resin compositions of this embodiment have a high laser transmittance and are capable of being laser-welded.

In addition, the resin compositions of this embodiment are capable of being laser-marked even when no colorant is contained (Examples 1-1, 1-4, 1-5) or when a dye is contained (Example 1-2), and can therefore be used as a resin composition that is capable of being laser-marked and for a transmitting resin member in laser welding.

Laser Welding

<Molding of First Member>

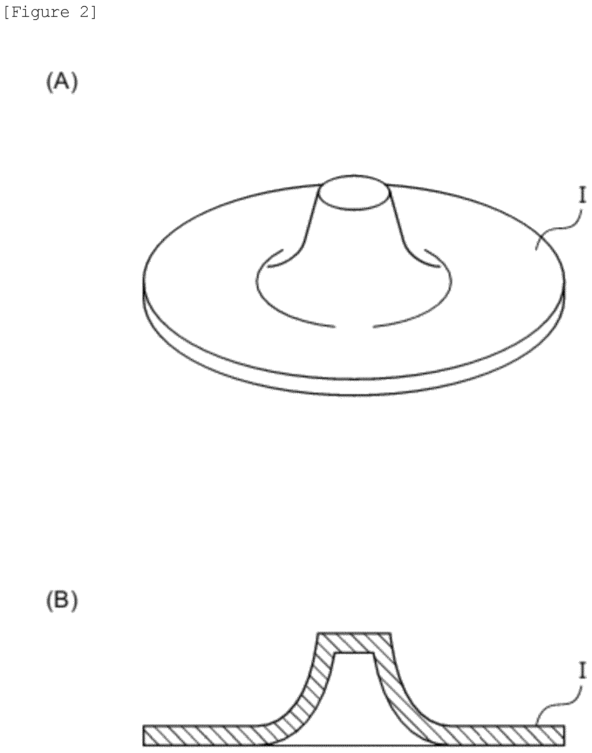

The above-described resin pellets were dried at 120°C for 5 hours and then molded using an injection molding machine ("J55" manufactured by The Japan Steel Works, Ltd.) at a cylinder temperature of 260°C and a mold temperature of 60°C to fabricate a 1.5 mm thick molded body (transmitting resin member I) as shown in Figure 2.

<Molding of Second Member>

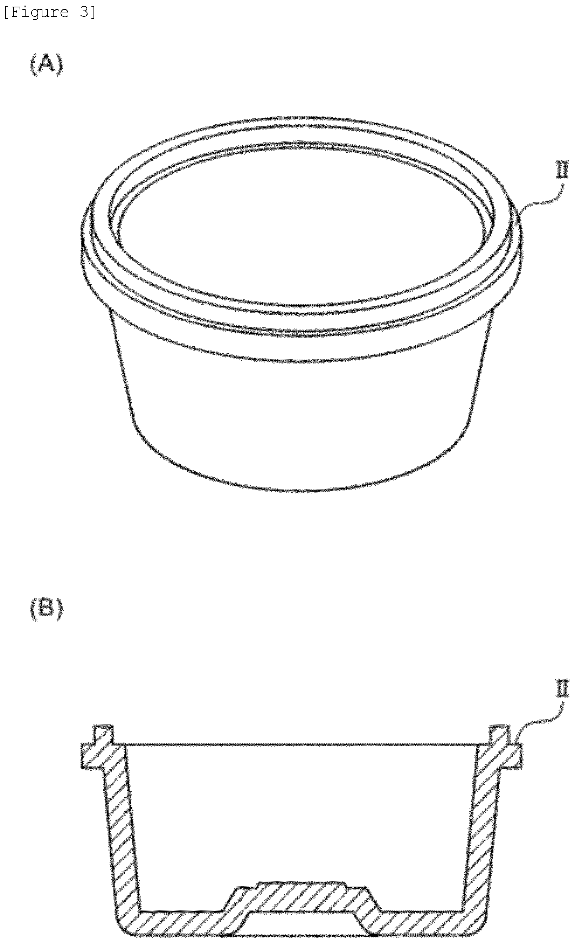

A PBT resin (NOVADURAN 5010G30X4/BK2) manufactured by Mitsubishi Engineering-Plastics Corporation was dried at 120°C for 5 hours and then molded using an injection molding machine ("J55" manufactured by The Japan Steel Works, Ltd.) at a cylinder temperature of 260°C and a mold temperature of 80°C to fabricate a molded body (absorbing resin member II) as shown in Figure 3.

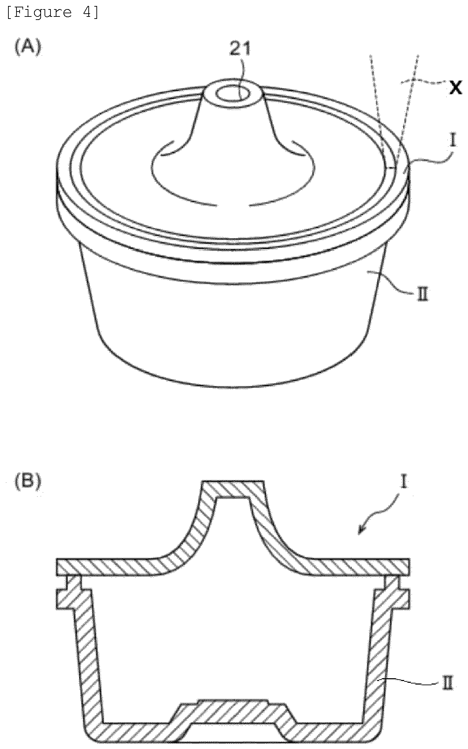

The first member shown in Table 4 was selected, and the lid-like transmitting resin member I was superposed on the box-like absorbing resin member II with jigs 23 and 24 for measuring the welding force placed inside holes 21 and 22 respectively, as shown in Figure 4. A laser light source was disposed at a position vertically above the flange portion that was the overlapping portion of the transmitting resin member I and the absorbing resin member II. While a pressing force (pushing force during welding) of 4.92 N/mm was applied to the overlapping portion of the transmitting resin member I and the absorbing resin member II in inward directions from both sides in the thickness direction using glass plates, a laser was radiated under the conditions shown in Table 4 to obtain a laser-welded body. The portion marked with the reference sign X in Figure 4 is the portion that was irradiated with the laser.

The welding apparatus is as follows.

<Galvano-Scanner Laser Welding>

    Laser apparatus: manufactured by IPG, YLR-300-AC-Y14
    Wavelength: 1070 nm
    Collimator: 7.5 mm
    Laser type: fiber
    Laser strength (power): 100 W
    Galvano-scanner: Fiber Elephants 21, manufactured by ARGES Aperture: 21 mm
    Laser irradiation speed: 900 mm/s
    Number of laser irradiation laps: as shown in Table 4 or Table 5 Circumference of welding portion: 137 mm

Laser light was defocused so that the spot diameter radiated on the welding surface was a diameter of 1 mm. Thus, the position of the laser scanner was adjusted.

<Laser Welding Strength>

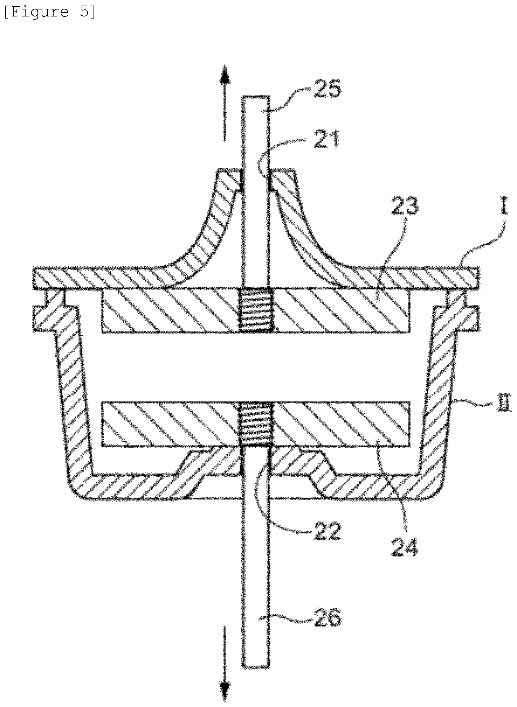

As shown in Figure 5, measurement jigs 25 and 26 were respectively inserted from the upper surface and the lower surface of a box composed of the transmitting resin member I and the absorbing resin member II fabricated above, bonded to jigs 23 and 24 housed inside, and pulled upward and downward (tensile speed: 5 mm/min), and the strength at which the transmitting resin member I and the absorbing resin member II separate (welding strength, unit: N) was measured.

For the measuring apparatus, a 100 kN TENSILON universal tester manufactured by ORIENTEC CO., LTD. was used.

The results are shown in the following Table 4.

[Table 4]

| Transmitting resin member I | Example 1-1 | Comparative Example 1-1 | Comparative Example 1-3 |
|---|---|---|---|
| Welding strength (N) | 1528 | 1449 | 1411 |

The laser-welded body obtained by using the resin composition of the present invention had a high laser welding strength (Example 1-1). In contrast, the laser-welded bodies obtained by using the resin compositions of Comparative Examples had a low laser welding strength.

3. Examples 2-1 to 2-2 and Comparative Examples 2-1 to 2-3

<Compound>

The components, except for the glass fibers, shown in Table 1-1 and Table 1-2 were uniformly mixed in the proportions (parts by mass) shown in Table 5 using a tumbler mixer. The obtained mixture was supplied to a twin-screw extruder ("TEX30α" manufactured by The Japan Steel Works, Ltd.) through the main feed port. The cylinder setting temperature in the first kneading section was 260°C, and the glass fibers were supplied from the side feeder. The cylinder temperature after the addition of glass fibers was set at 240°C, and the resin composition melted and kneaded under the conditions of a discharge of 40 kg/h and a screw rotation speed of 200 rpm was quenched in a water tank and pelletized using a pelletizer to obtain pellets of the resin composition.

<Environmental Burden>

Evaluation was made as follows.

A: Cases in which there is no adverse effect on other performance even when a recycled polycarbonate resin is used (including cases in which other performance improves)
B: Cases other than A above (cases in which only a virgin polycarbonate resin is used, cases in which other performance is adversely affected when a recycled polycarbonate resin is used, etc.)

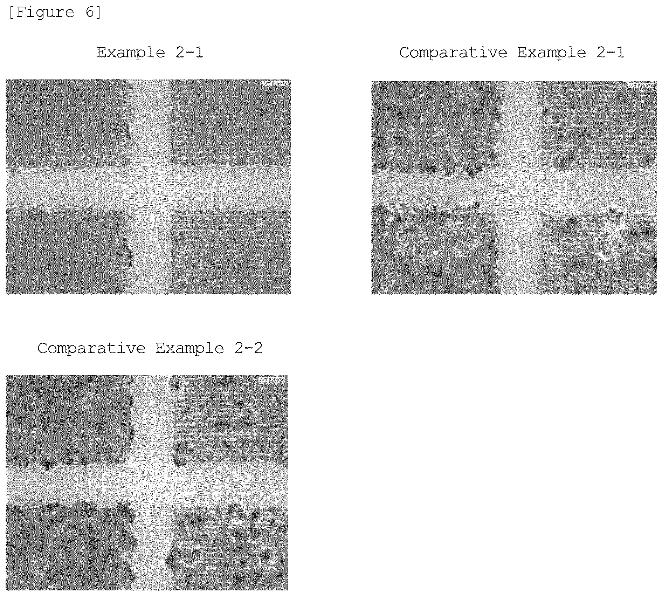

In the same manner as in Example 1-1, the light transmittance, laser printing visibility, tensile strength, and tensile modulus were measured. The photographs taken after laser printing in Example 2-1 and Comparative Examples 2-1 and 2-2 are shown in Figure 6. In Example 1-1, the boundary between printed area and non-printed area was clear and free from blurring, and the laser printing was performed clearly. In contrast, there were a lot of blurring in Comparative Examples 1-1 and 1-2, whereby it was difficult to distinguish the boundary between printed area and non-printed area, indicating inferior laser printability accuracy.

[Table 5]

| | | Example 2-1 | Example 2-2 | Comparative Example 2-1 | Comparative Example 2-2 | Comparative Example 2-3 |
|---|---|---|---|---|---|---|
| PBT | | 41.6 | 40.9 | 41.6 | 41.6 | 40.9 |
| R-PC1 | | 27.8 | 27.3 | | | |
| V-PC1 | | | | 27.8 | | 27.3 |
| V-PC2 | | | | | 27.8 | |
| Stabilizer 1 | % by mass | 0.1 | 0.1 | 0.1 | 0.1 | 0.1 |
| Stabilizer 2 | | 0.2 | 0.2 | 0.2 | 0.2 | 0.2 |
| Release agent | | 0.3 | 0.3 | 0.3 | 0.3 | 0.3 |
| Glass fibers | | 30.0 | 30.0 | 30.0 | 30.0 | 30.0 |
| Colorant 1 | | | 1.3 | | | 1.3 |
| Light transmittance | % | 62 | 64 | 66 | 57 | 69 |
| Environmental burden | - | A | A | B | B | B |
| Laser printing visibility | - | A | A | B | B | B |

(continued)

|  |  | Example 2-1 | Example 2-2 | Comparative Example 2-1 | Comparative Example 2-2 | Comparative Example 2-3 |
|---|---|---|---|---|---|---|
| Tensile strength | MPa | 140 | 138 | 141 | 141 | 140 |
| Tensile modulus | MPa | 9370 | 8940 | 9380 | 9200 | 8960 |

The resin compositions of the present invention had a high laser transmittance. Therefore, they were found to be suited for laser welding. Further, it was found that the laser welding strength was also high, according to the preliminary test by the inventors.

The resin compositions of the present invention did not adversely affect various performances even when a recycled polycarbonate resin was used, and the resin compositions is thus environmental-friendly.

The resin compositions of this embodiment had high laser printing visibility. That is, they had excellent laser marking properties.

Further, the resin compositions of this embodiment have a high laser transmittance and excellent laser marking properties, and are therefore suitably used as a resin composition capable of being laser-welded and/or laser-marked.

Laser Welding

In the same manner as in Example 1-1, the laser welding strength was measured. The results are shown in Table 6.

[Table 6]

| Transmitting resin member I | Example 2-1 | Comparative Example 2-2 |
|---|---|---|
| Welding strength (N) | 1528 | 1411 |

The laser-welded body obtained by using the resin composition of the present invention had a high laser welding strength (Example 2-1). In contrast, the laser-welded body obtained by using the resin composition of Comparative Example had a low laser welding strength (Comparative Example 2-2).

**Claims**

1. A resin composition comprising a polyester resin and a polycarbonate resin,

   wherein a mass ratio between the polyester resin and the polycarbonate resin is 10/90 to 90/10, wherein a total of the polyester resin and the polycarbonate resin is 100 parts by mass, and
   a content of aluminum element contained in the polycarbonate resin is 0.50 to 1000.00 ppm by mass per 100 parts by mass of the polycarbonate resin.

2. A resin composition comprising a polyester resin and a polycarbonate resin,

   wherein a mass ratio between the polyester resin and the polycarbonate resin is 10/90 to 90/10, wherein a total of the polyester resin and the polycarbonate resin is 100 parts by mass,
   the polycarbonate resin comprises a recycled product, and
   a molecular weight distribution (Mw/Mn) of the polycarbonate resin is 2.8 or more.

3. The resin composition according to claim 1 or 2, wherein the polyester resin comprises a polybutylene terephthalate resin.

4. The resin composition according to claim 1 or 2, wherein the polycarbonate resin comprises a recycled product.

5. The resin composition according to claim 1, wherein the polycarbonate resin comprises a recycled product, and a molecular weight distribution (Mw/Mn) of the polycarbonate resin is 2.8 or more.

6. The resin composition according to claim 2 or 5, wherein a viscosity average molecular weight Mv of the polycarbonate resin is 20,000 or more.

7. The resin composition according to claim 4, wherein the recycled product accounts for 50 parts by mass or more in 100 parts by mass of the polycarbonate resin.

8. The resin composition according to claim 1 or 2, wherein the mass ratio between the polyester resin and the polycarbonate resin is 50/50 to 90/10, wherein a total of the polyester resin and the polycarbonate resin is 100 parts by mass.

9. The resin composition according to claim 1 or 2, further comprising an inorganic filler.

10. The resin composition according to claim 9, wherein the inorganic filler comprises glass fibers and/or glass flakes.

11. The resin composition according to claim 1 or 2, further comprising a phosphorus-based stabilizer.

12. The resin composition according to claim 1 or 2, wherein when molded to a thickness of 1.5 mm, the resin composition has a light transmittance of 20.0% or more at a wavelength of 1064 nm.

13. The resin composition according to claim 1 or 2, wherein the resin composition is for laser marking.

14. The resin composition according to claim 1 or 2, wherein the resin composition is used for a laser light-transmitting resin member in laser welding.

15. The resin composition according to claim 1,

wherein the polyester resin comprises a polybutylene terephthalate resin,
the polycarbonate resin comprises a recycled product,
the recycled product accounts for 50 parts by mass or more in 100 parts by mass of the polycarbonate resin,
the mass ratio between the polyester resin and the polycarbonate resin is 50/50 to 90/10, wherein a total of the polyester resin and the polycarbonate resin is 100 parts by mass,
the resin composition further comprises an inorganic filler, the inorganic filler comprises glass fibers and/or glass flakes,
the resin composition further comprises a phosphorus-based stabilizer,
when molded to a thickness of 1.5 mm, the resin composition has a light transmittance of 20.0% or more at a wavelength of 1064 nm,
the resin composition is for laser marking, and
the resin composition is used for a laser light-transmitting resin member in laser welding.

16. The resin composition according to claim 2,

wherein the recycled product accounts for 50 parts by mass or more in 100 parts by mass of the polycarbonate resin, and a viscosity average molecular weight Mv of the polycarbonate resin is 20,000 or more,
the polyester resin comprises a polybutylene terephthalate resin,
the resin composition further comprises an inorganic filler, the resin composition further comprises a phosphorus-based stabilizer,
the resin composition is for laser marking, and
the resin composition is used for a laser light-transmitting resin member in laser welding.

17. A molded body formed from the resin composition according to any one of claims 1, 2, 15 and 16.

18. Pellets of the resin composition according to any one of claims 1, 2, 15 and 16.

19. A molded body formed from the pellets according to claim 18.

20. The molded body according to claim 17, wherein the molded body is for laser marking.

21. A laser-welded body comprising the molded body according to claim 17.

[Figure 1]

Example 1-1

Comparative Example 1-1

Comparative Example 1-2

Comparative Example 1-3

[Figure 2]

(A)

(B)

[Figure 3]

(A)

(B)

[Figure 4]

(A)

(B)

[Figure 5]

[Figure 6]

Example 2-1

Comparative Example 2-1

Comparative Example 2-2

| INTERNATIONAL SEARCH REPORT | International application No. |
|---|---|
| | **PCT/JP2023/003391** |

**A.    CLASSIFICATION OF SUBJECT MATTER**

*C08L 67/00*(2006.01)i; *B23K 26/00*(2014.01)i; *B23K 26/324*(2014.01)i; *B23K 26/57*(2014.01)i; *B29C 65/16*(2006.01)i; *C08K 3/013*(2018.01)i; *C08K 3/08*(2006.01)i; *C08K 3/40*(2006.01)i; *C08K 7/14*(2006.01)i; *C08L 67/02*(2006.01)i; *C08L 69/00*(2006.01)i

FI:    C08L67/00; B23K26/00 B; B23K26/324; B23K26/57; B29C65/16; C08K3/013; C08K3/08; C08K3/40; C08K7/14; C08L67/02; C08L69/00

According to International Patent Classification (IPC) or to both national classification and IPC

**B.    FIELDS SEARCHED**

Minimum documentation searched (classification system followed by classification symbols)

C08L67/00; B23K26/00; B23K26/324; B23K26/57; B29C65/16; C08K3/013; C08K3/08; C08K3/40; C08K7/14; C08L67/02; C08L69/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2018-2996 A (FUJI XEROX CO LTD) 11 January 2018 (2018-01-11) | 2, 4, 6-7, 10-11, 17-19 |
| | claims 1-3, paragraphs [0058], [0067]-[0070], examples 1-3, 5, table 1 | |
| A | | 1, 3, 5, 8-9, 12-16, 20-21 |
| X | JP 2010-513609 A (ECKART GMBH) 30 April 2010 (2010-04-30) | 1, 3, 8-14, 17-21 |
| | claims 1-21, paragraphs [0097], [0149]-[0154], example 11, table 1 | |
| Y | | 2, 4-7, 15-16 |
| Y | JP 2017-141339 A (MITSUBISHI ENG PLASTICS CORP) 17 August 2017 (2017-08-17) | 2, 4-7, 15-16 |
| | paragraph [0003] | |
| Y | JP 2021-155510 A (FUJIFILM BUSINESS INNOVATION CORP) 07 October 2021 (2021-10-07) | 2, 4-7, 15-16 |
| | paragraphs [0044]-[0047] | |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 March 2023** | **04 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/003391**

| Box No. III | Observations where unity of invention is lacking (Continuation of item 3 of first sheet) |

This International Searching Authority found multiple inventions in this international application, as follows:

(Invention 1) Claims 1, 5, and 15, and parts referring to claim 1 in invention in claims 3-4, 6-14, and 17-21

Claims 1, 5, and 15 and parts referring to claim 1 in the invention in claims 3-4, 6-14, and 17-21 have the special technical feature of a "resin composition containing a polyester resin and a polycarbonate resin, wherein the mass ratio of the polyester resin to the polycarbonate resin is 10/90 to 90/10 with respect to 100 parts by mass of the total of the polyester resin and the polycarbonate resin, and the amount of aluminum element contained in the polycarbonate resin is 0.50-1000.00 ppm by mass with respect to 100 parts by mass of the polycarbonate resin," and are thus classified as invention 1.

(Invention 2) Claims 2 and 16, and parts referring to claim 2 in invention in claims 3-4, 6-14, and 17-21

Claims 2 and 16 and parts referring to claim 2 in the invention in claims 3-4, 6-14, and 17-21 share, with claim 1 classified as invention 1, the common technical feature of a "resin composition containing a polyester resin and a polycarbonate resin, wherein the mass ratio of the polyester resin to the polycarbonate resin is 10/90 to 90/10 with respect to 100 parts by mass of the total of the polyester resin and the polycarbonate resin." However, said technical feature does not make a contribution over the prior art in light of the disclosure of document 1 (in particular, see table 1), and thus cannot be considered a special technical feature. Also, there are no other same or corresponding special technical features between said claims and claim 1.

Furthermore, said claims are not dependent on claim 1. In addition, said claims are not substantially identical to or similarly closely related to any of the claims classified as invention 1.

Therefore, claims 2 and 16, and the parts referring to claim 2 in the invention in claims 3-4, 6-14, and 17-21 cannot be classified as invention 1.

In addition, these claims have the special technical feature of a "resin composition containing a polyester resin and a polycarbonate resin, wherein the mass ratio of the polyester resin to the polycarbonate resin is 10/90 to 90/10 with respect to 100 parts by mass of the total of the polyester resin and the polycarbonate resin, the polycarbonate resin includes a recycled product, and the molecular weight distribution (Mw/Mn) of the polycarbonate resin is at least 2.8," and are thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

INTERNATIONAL SEARCH REPORT
Information on patent family members

| International application No. |
| --- |
| **PCT/JP2023/003391** |

| Patent document cited in search report | | | Publication date (day/month/year) | Patent family member(s) | Publication date (day/month/year) |
| --- | --- | --- | --- | --- | --- |
| JP | 2018-2996 | A | 11 January 2018 | US 2017/0369701 A1 claims 1-7, paragraphs [0060], [0069]-[0073], examples 1-3, 5, table 1 CN 107541041 A | |
| JP | 2010-513609 | A | 30 April 2010 | US 2010/0009171 A1 claims 1-21, paragraphs [0098], [0155]-[0162], inventive example 11, table 1 EP 1968781 A1 CN 101610894 A WO 2008/083726 A1 | |
| JP | 2017-141339 | A | 17 August 2017 | (Family: none) | |
| JP | 2021-155510 | A | 07 October 2021 | US 2021/0301128 A1 paragraphs [0058]-[0061] EP 3885409 A1 CN 113444351 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6183822 B
- JP 2020050822 A
- WO 2020013127 A
- JP 2018070722 A
- JP 2019123809 A
- WO 2021225154 A
- JP 4157300 B
- JP 4040460 B